# EUROPEAN PATENT SPECIFICATION

(11) **EP 0 699 990 B1**
(45) Date of publication and mention of the grant of the patent: **24.03.1999**
(21) Application number: 95830368.7
(22) Date of filing: 31.08.1995
(51) Int. Cl.: G05G 1/06

(54) **Composite ball grip for car gearbox lever**
Zusammengestellter Handgriff für Getriebeschalthebel
Pommeau composite pour levier de changement de vitesse de véhicules

(30) Priority: 02.09.1994 IT BO940399
(43) Date of publication of application: 06.03.1996
(73) Proprietor: STUDIO FUTURO S.r.l., 48022 Lugo (Ravenna) (IT)
(72) Inventor: Cumali, Vincenzo, I-48022 Lugo (Ravenna) (IT)
(74) Representative: Lanzoni, Luciano

(56) References cited:
- FR-A- 2 492 875
- GB-A- 1 527 672
- US-A- 4 991 461
- PATENT ABSTRACTS OF JAPAN vol. 009 no. 062 (P-342) ,19 March 1985 & JP-A-59 197910 (NISSAN JIDOSHA KK;OTHERS: 01) 9 November 1984,

## Description

The present invention relates to a composite ballgrip for car gearbox levers.

The ballgrip is particularly used in the field of components and accessories for cars; the above mentioned ballgrip has to meet not only functional and ergonomical needs but it has to be up to a reasonable aesthetic standard in such a way as to allow particular personalization and/or enhance prestige of the vehicles.

Many prior art ballgrips have the drawback that they are manufactured as a single piece so their substitution implies intervention on the mechanical joint which is normally present between the ballgrip and the gearbox lever.

Such operation needs a certain level of professional experience by the person who carries out the substitution (at least regarding safety), a certain amount of time and the suitable equipment and therefore this operation cannot be performed independently and above all quickly by the car driver. For this reason, said substitution turns out to be not only difficult, awkward and expensive to carry out but also penalizing to those who wish to renew the look of the inside of the motor car.

A composite ballgrip is known from the patent GB 1527672: there is claimed a knob including a removable upper position, which comprises a peripheral projection complementary to a perpheral recess of the lower portion. However, the junction between the upper and the lower portion may be removed during the march, unless they are sticked.

The aim of the present invention, as characterised in the claims, is therefore that to eliminate all the above mentioned drawbacks. The aim of the present invention is attained by means of a composite ballgrip in which there is a cap and a body of the ballgrip, both of which are separate and detachable and are interconnected by removable joining means thus allowing a variation of the overall look of the ballgrip, by substituting manually only the cap, leaving the body of the ballgrip in a stable position on the gearbox lever.

The main advantage attained by the present invention is that the join between the ballgrip and the gearbox lever does not have to be touched, thus allowing the car driver to carry out several different variations of the ballgrip manually and rapidly.

A further advantage of the present invention is also represented by the endless number of aesthetic variations that are cheap and easy to carry out, since said variations are obtainable by means of a combination, on the same body of the ballgrip, of a plurality of caps in different forms, decorations, colours and/or constructive materials.

Further advantages and characteristics of the present invention will better emerge from the detailed description that follows made with reference to the accompanying drawings which represent a preferred embodiment in the form of a non-limiting example wherein:
- Figure 1 shows a perspective view of the whole ballgrip according to the embodiment of the present invention;
- Figure 2 shows a view from above of the ballgrip of figure 1 in which several parts have been removed so as to better emphasize others;
- Figure 3 shows an exploded perspective view of the ballgrip of figure 1;
- Figure 4 shows a section of the ballgrip taken along the section line IV-IV of figure 3;
- Figure 5 shows a partially sectioned and exploded perspective view of a variation of the embodiment of the ballgrip of figure 1;
- Figure 6 shows on a larger scale a part of the joining of the cap to the body of the ballgrip according to the present invention;

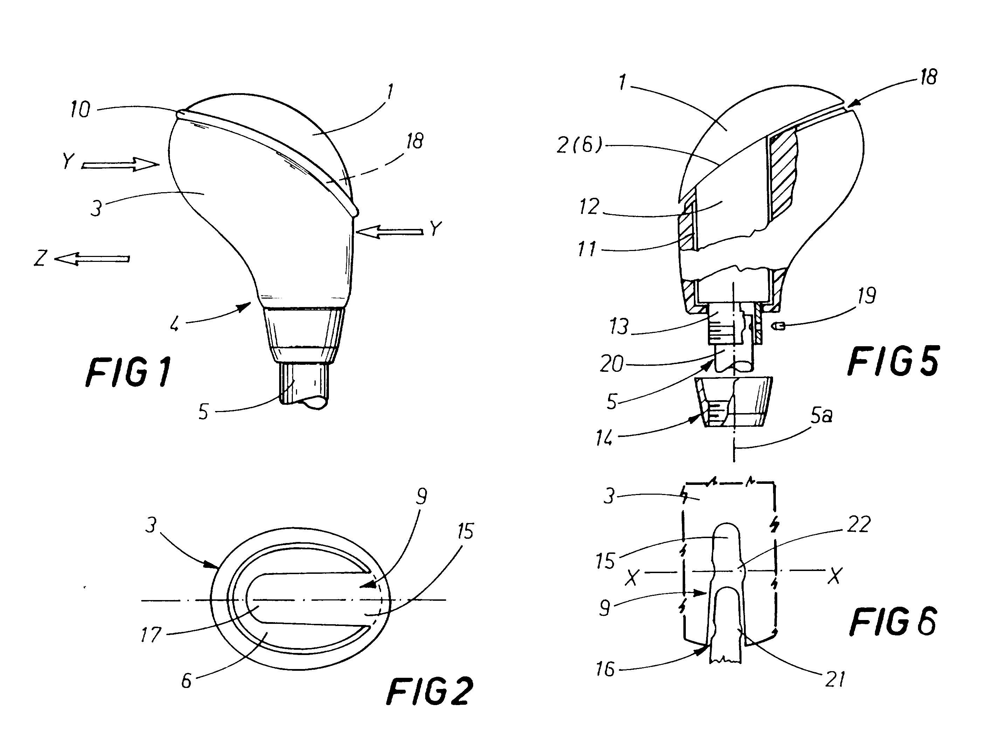

With reference to figure 1, enclosed herewith, it can be seen that the present invention consists substantially of a composite ballgrip (4) for the gearbox lever of a motor car, substantially composed of a cap (1) which is preferably made of polyurethan, said ballgrip being covered with a coat of decorating material, and of an underlying body (3) of the ballgrip (4), which body is made of plastics or different material, said components being manufactured as separate, detachable parts which are reciprocally connected by removable interposed joining means (7).

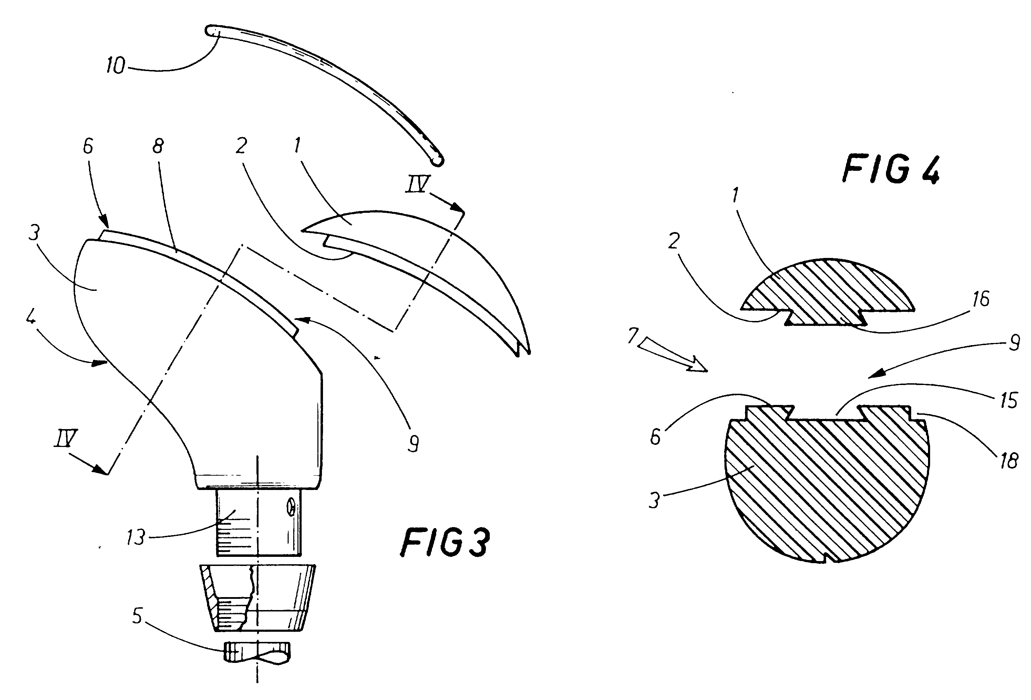

The body (3) of the ballgrip (4) is supported by the gearbox lever (5), to which the ballgrip (4) is mechanically interconnected, and is fitted with (figures 2, 3) a shaped coupling surface (6), with a preferably curvilinear generatrix (which could also be rectilinear), which is able to support the cap (1), at a complementary coupling surface (2) geometrically similar and located on the latter (figure 3).

The overall dimensions of the cap (1) are less than those of the body (3) of the ballgrip (4).

The cap (1) and the body (3) of the ballgrip (4) are shaped in such a way that the coupling surfaces (2, 6) are inclined with respect to directions (Y) along which operate the driving forces which are applied onto the gearbox lever (5) during the use of said gearbox lever (5).

In particular the range of such inclination and orientation of the coupling surfaces (2, 6) are correlated to a direction of movement (Z) of the vehicle in such a way that the driving forces onto the gearbox lever (5), in both pulling and pushing directions, can only be applied to the body (3) of the ballgrip (4); whereas when the driving forces are applied directly onto the cap (1), they can only be applied in pulling or pushing directions.

Removable joining means (7) preferably include (figures 2, 4) a guide (9) with a unidirectional swallowtail formed by a groove (15), obtained in the body (3) of the ballgrip (4), and a sliding block (16) which is supported by the cap (1); said parts are reciprocally coupled for reciprocal tangential sliding of the coupling surfaces (2, 6), of the cap (1) and the body (3) for the assembling of the ballgrip (4).

A reaction element (10) can be fixed to the guide (9); said element is preferably made up of an elastic ring surrounding the guide (9) for preventing the spontaneous reverse movement of the cap (1) with respect to the body (3) after the fitting of the ballgrip (4).

As the guide (9), in correspondence with the groove (15), has a stop element (17) (with a rounded end) for the sliding of the cap (1) with respect to the body (3), the elastic ring-shaped reaction element (10) constantly keeps the cap (1) pressed down against the body (3) contrasting said stop element (17).

The orientation of the guide (9) and in particular the orientation of its stop element (17) are correlated with the direction of movement (Z) so that the stop element (17) contrasts the unidirectional action possibly carried out by the driver onto the cap (1), thus enabling said cap to transfer the actions previously received to the body (3) of the ballgrip (4).

As clearly shown in figures 1, 2, 4, 5 the ballgrip (4) shows on its periphery a seat (18) for the housing of the elastic ring obtained between the body (3) and the cap (1).

The seat (18) has a curvilinear shape, which is similar to the generatrix development (8) of the coupling surfaces (2, 6) between the cap (1) and the body (3). Apart from offering a good aesthetic characterisation to the ballgrip (4) with (figure 1) or without (figure 5) the elastic ring, said curvilinear shape allows the ballgrip to apply advantageously a reciprocal forcing of the sliding block (16) and of the groove (15) which, by causing an increase in the friction during the sliding of the guide (9), further contributes to keeping the cap (1) fixed on the body (3) of the ballgrip (4) during the use of the ballgrip itself.

As mentioned above, the ballgrip (4) engages mechanically to the gearbox lever (5). This is possible because the joining means (7) include (figure 5) a tubular end (13) externally threaded, supported by the body (3) of the ballgrip (4), which tubular end (13), after being coupled to one end (20) of the gearbox lever (5) by means of an axial coupling movement, is then secured to said end (20) by means of a dowel (19); the assembling is then completed by a threaded metal ring (14) coaxially mobile to the gearbox lever which in turn engages onto the tubular end (13).

In a different embodiment of the present invention, (figure 5) the removable joining means (7) also include a cavity (11), which is obtained by the crossing over of the body (3) of the ballgrip (4), and a coupling element (12), whose shape is geometrically complementary to the shape of the cavity (11), supported by the cap (1).

The coupling element (12) can be inserted into the cavity (11) starting from an initial disengaged position of the cap (1) from the body (3) of the ballgrip (4) to a final position of complete insertion in which the coupling surfaces (2, 6) reciprocally match. In said final position the tubular end (13), which in this case is supported directly by the coupling element (12), comes out of the cavity (11) of the body (3) from an opposite part with respect to the cap (1) and can be engaged to the gearbox lever (5) in the same way as mentioned above.

In order to prevent the cap (1) from rotating about the axis (5a) of the gearbox lever (5) and taking an undesired position with respect to the body (3), the coupling element (12) and the cavity (11), in which said element is housed, can take, in general, a plurality of shapes, which are different from their cross sections: elliptical, polygonal but not circular or, however, said element and cavity can be fitted with other equivalent anti-rotation means.

A further variation (figure 6) of the preferred embodiment, which can substitute the elastic ring embodiment of the reaction element (10), is offered by the possibility of creating projections (21) and recesses (22), complementary and elastically yielding upon manual forcing when mounting the cap (1) on the body (3), on the sliding block (16) and on the groove (15) of the guide (9), on condition that the material constituting the cap (1) or the body (3) of the ballgrip (4) makes it possible.

The effect obtained by said projections (21) and recesses (22) can be achieved in more or less the same way by carrying out the groove (15) and the sliding block (16) in such a way that they can reciprocally, dimensionally interfere, forcing each other in a direction (X), which is transversal to the guide (9), when the sliding block (16) comes close to the stop element (17).

## Claims

1. Composite ballgrip for gearbox lever, comprising: at least one cap (1) having coupling surfaces (2), a body (3) of the ballgrip (4) which can be mounted onto said gearbox lever (5) and bearing its own coupling surface (6) corresponding to the coupling surface (2) of the cap (1) to which it can be matched in such a way as to be able to support the cap (1) allowing said body (3) together with said cap (1) to constitute said composite ballgrip (4); stable joining means (7) of said cap (1) which are removable from said body (3) of the ballgrip (4) for the mounting, onto said body (3), of a plurality of different caps (1) placed one as an alternative to the other, characterised in that said coupling surfaces (2,6) are inclined with respect to one direction (Y) along which operates the driving force of the gearbox lever (5).

2. Ballgrip as in claim 1, characterised in that said coupling surfaces (2,6) of the cap (1) and the body (3) of the ballgrip (4) have curvilinear generatrixes (8).

3. Ballgrip as in claim 1, characterised in that said coupling surfaces (2,6) of the cap (1) and the body (3) of the ballgrip (4) have rectilinear generatrixes (8).

4. Ballgrip as in claim 1, characterised in that said cap (1) has overall dimensions which are not higher than the overall dimensions of the body (3) of said ballgrip (4).

5. Ballgrip as in claim 1, characterised in that said cap (1) has overall dimensions which are not higher than the overall dimensions of the body (3) of the ballgrip (4), and coupling surfaces (2) which can be matched to the corresponding coupling surface (6) of the body (3) which are inclined with respect to one direction (Y) along which operates the driving force of the gearbox lever (5) in such a way that said driving force can be applied directly onto the body (3) of the ballgrip (4) in both directions.

6. Ballgrip as in claim 1 characterised in that the said cap (1) has a coupling surface (2) which is inclined with respect to one direction (Y) along which operates the driving force of the gearbox lever (5) in such a way that said force is applied onto said cap (1) in only one direction.

7. Ballgrip according to claim 1, characterized in that the said removable joining means (7) include:
- a guide (9) interposed between said body (3) and said cap (1) so as to permit their relevant running tangentially to said coupling surfaces (2,6) in the assembling phase of said ballgrip (4);
- a reaction element (10) coupled with said guide (9) in such a way as to oppose to the backward running of the cap (1) onto the body (3) ensuring its reciprocal stable positioning during the use of the said gearbox lever (5).

8. Ballgrip as in claim 1, characterised in that said joining means (7) include a cavity (11) obtained in the crossing of the said body (3) of the ballgrip (4) and a coupling element (12) supported by the said cap (1) which can be inserted into said cavity (11) starting from an initial disengaged position of the cap (1) from the body (3) of the ballgrip (4) to a position of contact of said coupling surfaces (2, 6), said coupling element (12) being provided with a tubular end (13) coming out of the cavity (11) of the body (3) in said second final position which end can be coupled with said gearbox lever (5), said removable joining means (7) include also a metal ring (14) which engages onto the tubular end (13) in such a way as to reciprocally lock the cap (1) and the coupling element (12) contrasting said coupling surfaces (2, 6).

9. Ballgrip as in claim 8, characterised in that said guide (9) includes a groove (15) and a sliding block (16) supported by said body (3) and said cap (1).

10. Ballgrip as in claim 8, characterised in that the said reaction element (10) is constituted by an elastic ring which encircles the said guide (9).

11. Ballgrip as in claim 8, characterised in that the said reaction element (10) includes complementary projections (21) and recesses (22) obtained on the said guide (9).

12. Ballgrip as in claim 9, characterised in that the said cavity (11) and said coupling element (12) are complementary shaped so as to avoid the relevant rotation movement about the axis (5a) of the gearbox lever (5) of the cap (1) with respect to the body (3).

13. Ballgrip as in claim 9, characterised in that said tubular end (13) and said metal ring (14) are reciprocally threaded.

14. Ballgrip as in claim 10, characterised in that the said groove (15) is unidirectional and equipped with a stop element (17) of the relevant running of said cap (1) with respect to the body (3) of the ballgrip (4).

15. Ballgrip as in claim 10, characterised in that the said groove (15) and said sliding block (16) are shaped as a swallowtail.

16. Ballgrip as in claim 11, characterised in that said body (3) and said cap (1) define, in a reciprocal combination, a seat (18) for housing said reaction element (10) being shaped as an elastic ring.

17. Ballgrip as in claim 12, characterised in that said complementary projections (21) and recesses (22) obtained on said guide (9) are elastically yielding in a direction (X) which is transversal to the running direction of said guide (9).

## Patentansprüche

1. Zusammengestellter Handgriff für Getriebeschalthebel, enthaltend: wenigsten eine Kappe (1) mit Kopplungsflächen (2); einen Körper (3) des Handgriffes (4), welcher an dem genannten Getriebeschalthebel (5) montiert werden kann und seine eigene Kopplungsfläche (6) enthält, die der Kopplungsfläche (2) der Kappe (1) entspricht, welcher er auf solche Weise angepasst werden kann, dass die Kappe (1) gehalten werden kann und es dem genannten Körper (3) zusammen mit der genannten Kappe (1) erlaubt ist, den genannten zusammengestellten Handgriff (4) zu bilden; stabile Verbindungsmittel (7) der genannten Kappe (1), welche von dem genannten Körper (3) des Handgriffes (4) lösbar sind, und zwar zur Montage an dem genannten Körper (3) von einer Anzahl verschiedener Kappen (1), angebracht eine als Alternative zur anderen, **dadurch gekennzeichnet,** dass die genannten Kopplungsflächen (2, 6) geneigt sind im Verhältnis zu einer Richtung (Y), entlang welcher die Betätigungskraft des Getriebeschalthebels (5) ausgeübt wird.

2. Handgriff nach Patentanspruch 1, **dadurch gekennzeichnet**, dass die genannten Kopplungsflächen (2, 6) der Kappe (1) und des Körpers (3) des Handgriffes (4) kurvenlineare Erzeugende (8) haben.

3. Handgriff nach Patentanspruch **1, dadurch gekennzeichnet,** dass die genannten Kopplungsflächen (2, 6) der Kappe (1) und des Körpers (3) des Handgriffes (4) geradlinige Erzeugende (8) haben.

4. Handgriff nach Patentanspruch 1, **dadurch gekennzeichnet,** dass die genannte Kappe (1) solche Gesamtabmessungen hat, die nicht grösser sind als die Gesamtabmessungen des Körpers (3) des genannten Handgriffes (4).

5. Handgriff nach Patentanspruch 1, **dadurch gekennzeichnet,** dass die genannte Kappe (1) solche Gesamtabmessungen hat, die nicht grösser sind als die Gesamtabmessungen des Körpers (3) des genannten Handgriffes (4), sowie Kopplungsflächen (2), welche den entsprechenden Kopplungsflächen (6) des Körpers (3) angepasst werden können, die im Verhältnis zu einer Richtung (Y), entlang welcher die Betätigungskraft des Getriebeschalthebels (5) ausgeübt wird, geneigt sind, und zwar auf solche Weise, dass die genannte Betätigungskraft in beiden Richtungen direkt auf den Körper (3) des Handgriffes (4) angewandt werden kann.

6. Handgriff nach Patentanspruch 1, **dadurch gekennzeichnet,** dass die genannte Kappe (1) eine Kopplungsfläche (2) aufweist, welche im Verhältnis zu einer Richtung (Y), entlang welcher die Betätigungskraft des Getriebeschalthebels (5) ausgeübt wird, geneigt ist, und zwar auf solche Weise, dass die genannte Kraft in nur einer Richtung auf die genannte Kappe (1) angewandt wird.

7. Handgriff nach Patentanspruch 1, **dadurch gekennzeichnet,** dass die genannten lösbaren Verbindungsmittel (7) wie folgt enthalten:
- eine Führung (9), eingesetzt zwischen dem genannten Körper (3) und der genannten Kappe (1), so dass deren sachgemässes Gleiten tangential zu den genannten Kopplungsflächen (2, 6) während des Zusammenstellens des genannten Handgriffes (4) ermöglicht wird;
- ein Gegendruckelement (10), das mit der genannten Führung (9) verbunden ist, und zwar auf solche Weise, dass es einem Zurückgleiten der Kappe (1) auf dem Körper (3) entgegenwirkt und somit die gegenseitige stabile Positionierung während der Benutzung des genannten Getriebeschalthebels (5) gewährleistet.

8. Handgriff nach Patentanspruch 1, **dadurch gekennzeichnet,** dass die genannten Verbindungsmittel (7) einen Hohlraum (11) enthalten, erhalten durch Einarbeitung quer durch den genannten Körper (3) des Handgriffes (4), sowie ein von der genannten Kappe (1) getragenes Kopplungselement (12), welches in den genannten Hohlraum (11) eingesetzt werden kann, ausgehend von einer anfänglichen freigegebenen Position der Kappe (1) von dem Körper (3) des Handgriffes (4) bis hin zu einer Position des Kontaktes der genannten Kopplungsflächen (2, 6), wobei das genannte Kopplungselement (12) mit einem rohrförmigen Ende (13) versehen ist, welches in der genannten endgültigen Position aus dem Hohlraum (11) des Körpers (3) herausragt, welches Ende mit dem genannten Getriebeschalthebel (5) verbunden werden kann, wobei die lösbaren Verbindungsmittel (7) ebenfalls einen Metallring (14) enthalten, der auf solche Weise über das rohrförmige Ende (13) greift, dass die Kappe (1) und das Kopplungselement (12) im gegenseitigen Anschlag der genannten Kopplungsflächen (2, 6) miteinander befestigt werden.

9. Handgriff nach Patentanspruch 8, **dadurch gekennzeichnet,** dass die genannte Führung (9) eine Rille (15) und einen Gleitschuh (16) enthält, getragen von dem genannten Körper (3) und der genannten Kappe (1).

10. Handgriff nach Patentanspruch 8, **dadurch gekennzeichnet,** dass das genannte Gegendruckelement (10) durch einen Federring gebildet wird, welcher die genannte Führung (9) umgibt.

11. Handgriff nach Patentanspruch 8, **dadurch gekennzeichnet,** dass das genanntc Gegendruckelement (10) ergänzende Vorsprünge (21) und Vertiefungen (22) enthält, die an der genannten Führung (9) an- und eingearbeitet sind.

12. Handgriff nach Patentanspruch 9, **dadurch gekennzeichnet,** dass der genannte Hohlraum (11) und das genannte Kopplungselement (12) ergänzend zueinander geformt sind, so dass eine entsprechende Drehbewegung der Kappe (1) im Verhältnis zu dem Körper (3) um die Achse (5a) des Getriebeschalthebels (5) vermieden wird.

13. Handgriff nach Patentanspruch 9, **dadurch gekennzeichnet,** dass das genannte rohrförmige Ende (13) und der genannte Metallring (14) gegenseitig mit einem Gewinde versehen sind.

14. Handgriff nach Patentanspruch 10, **dadurch gekennzeichnet,** dass die genannte Rille (15) in einer Richtung verläuft und mit einem Anschlagelement (17) zum Anhalten des Gleitens der genannten Kappe (1) im Verhältnis zu dem Körper (3) des Handgriffes (4) versehen ist.

15. Handgriff nach Patentanspruch 10, **dadurch gekennzeichnet,** dass die genannte Rille (15) und der genannte Gleitschuh (16) schwalbenschwanzartig ausgebildet sind.

16. Handgriff nach Patentanspruch 11, **dadurch gekennzeichnet,** dass der genannte Körper (3) und die genannte Kappe (1) in einer gegenseitigen Verbindung miteinander einen Sitz (18) zur Aufnahme des genannten Gegendruckelementes (10) bilden, welches wie ein Federring ausgebildet ist.

17. Handgriff nach Patentanspruch 12, **dadurch gekennzeichnet,** dass die genannten sich ergänzenden Vorsprünge (21) und Vertiefungen (22), die sich an der genannten Führung (9) befinden, in einer Richtung (X) elastisch nachgebend sind, welche quer zu der Gleitrichtung der genannten Führung (9) verläuft.

## Revendications

1. Pommeau composite pour levier de changement de vitesse, comprenant: au moins une calotte (1) ayant des surfaces d'accouplement (2); un corps (3) du pommeau (4) pouvant être monté sur ledit levier de changement de vitesse (5) et comportant ses propres surfaces d'accouplement (6) correspondant aux surfaces d'accouplement (2) de la calotte (1) sur lesquelles elles peuvent être adaptées de manière à pouvoir supporter la calotte (1) permettant ainsi au corps (3) et à la calotte (1) de constituer ledit pommeau composite(4); des moyens stables de jointure (7) de ladite calotte (1) amovible à l'égard dudit corps (3) du pommeau (4) pour le montage, dans ledit corps (3), d'une pluralité de calottes (1) différentes placées l'une alternativement à l'autre, caractérisé en ce que lesdites surfaces d'accouplement (2, 6) sont inclinées par rapport à une direction (Y) le long de laquelle opère la force d'actionnement du levier de changement de vitesse (5).

2. Pommeau selon la revendication 1, caractérisé en ce que lesdites surfaces d'accouplement (2, 6) de la calotte (1) et le corps (3) du pommeau (4) ont des génératrices curvilignes (8).

3. Pommeau selon la revendication 1, caractérisé en ce que lesdites surfaces d'accouplement (2, 6) de la calotte (1) et le corps (3) du pommeau (4) ont des génératrices curvilignes (8).

4. Pommeau selon la revendication 1, caractérisé en ce que ladite calotte (1) a des dimensions totales non supérieures à celles du corps (3) dudit pommeau (4).

5. Pommeau selon la revendication 1, caractérisé en ce que ladite calotte (1) a des dimensions totales non supérieures à celles du corps (3) du pommeau (4), et des surfaces d'accouplement (2) pouvant être adaptées aux surfaces d'accouplement (6) correspondantes du corps (3) qui sont inclinées par rapport à la direction (Y) le long de laquelle opère la force d'actionnement du levier de changement de vitesse (5) de manière à ce que ladite force d'actionnement puisse être appliquée directement sur le corps (3) du pommeau (4) dans les deux directions.

6. Pommeau selon la revendication 1, caractérisé en ce que ladite calotte (1) a une surface d'accouplement (2) inclinée par rapport à une direction (Y) le long de laquelle opère la force d'actionnement du levier de changement de vitesse (5) de manière à ce que ladite force soit appliquée sur ladite calotte (1) dans une seule direction.

7. Pommeau selon la revendication 1, caractérisé en ce que lesdits moyens de jointure amovibles (7) comprennent:
- un guide (9) interposé entre ledit corps (3) et ladite calotte (1) de manière à permettre leur translation tangentielle auxdites surfaces d'accouplement (2, 6) dans les phases d'assemblage dudit pommeau (4);
- un élément de réaction (10) associé audit guide (9) de manière à s'opposer à la translation contraire de la calotte (1) par rapport au corps (3) en assurant son positionnement stable pendant l'utilisation dudit levier de changement de vitesse (5).

8. Pommeau selon la revendication 1, caractérisé en ce que lesdits moyens de jointure (7) comprennent une cavité (11) traversant ledit corps (3) du pommeau (4) et un élément d'accouplement (12) supporté par ladite calotte (1) pouvant être inséré dans ladite cavité (11) en partant d'une position initiale de la calotte (1) désengagée du corps (3) du pommeau (4) et finissant dans une position de contact desdites surfaces d'accouplement (2, 6), ledit élément d'accouplement (12) étant pourvu d'une extrémité tubulaire (13) sortant de la cavité (11) du corps (3) dans ladite seconde position finale, laquelle extrémité peut être accouplée avec ledit levier de changement de vitesse (5), lesdits moyens de jointure amovibles (7) comprenant également une bague métallique (14) qui s'engage sur l'extrémité tubulaire (13) de manière à bloquer réciproquement la calotte (1) et l'élément d'accouplement (12) en mettant en relation lesdites surfaces d'accouplement (2, 6).

9. Pommeau selon la revendication 8, caractérisé en ce que ledit guide (9) comprend une rainure (15) et un bloc de glissement (16) supportés par ledit corps (3) et ladite calotte (1).

10. Pommeau selon la revendication 8, caractérisé en ce que ledit élément de réaction (10) est constitué par un anneau élastique qui entoure ledit guide (9).

11. Pommeau selon la revendication 8, caractérisé en ce que ledit élément de réaction (10) comprend des saillies complémentaires (21) et des dépressions (22) obtenues sur ledit guide (9).

12. Pommeau selon la revendication 9, caractérisé en ce que ladite cavité (11) et ledit élément d'accouplement (12) sont de formes complémentaires de manière à éviter le mouvement de rotation selon l'axe (5a) du levier de changement de vitesse (5) de la calotte (1) par rapport au corps (3).

13. Pommeau selon la revendication 9, caractérisé en ce que ladite extrémité tubulaire (13) et ladite bague métallique (14) sont réciproquement filetées.

14. pommeau selon la revendication 10, caractérisé en ce que ladite rainure (15) est unidirectionnelle et équipée d'un élément d'arrêt (17) de la translation de ladite calotte (1) par rapport au corps (3) du pommeau (4).

15. Pommeau selon la revendication 10, caractérisé en ce que ladite rainure (15) et ledit bloc de glissement (16) ont une forme de queue d'aronde.

16. Pommeau selon la revendication 11, caractérisé en ce que ledit corps (3) et ladite calotte (1) définissent, dans une combinaison réciproque, une base (18) pour loger ledit élément de réaction (10) étant conformé en un anneau élastique.

17. Pommeau selon la revendication 12, caractérisé en ce que lesdites saillies complémentaires (21) et les dépressions (22) obtenues sur ledit guide (9) sont élastiquement déformables dans une direction (X) transversale à la direction de translation dudit guide (9).
